# EUROPEAN PATENT APPLICATION

(11) **EP 4 729 499 A1**
(43) Date of publication of application: **22.04.2026**
(21) Application number: 25208401.7
(22) Date of filing: 13.10.2025
(51) Int. Cl.: C04B 41/00, C04B 41/52, C04B 41/89, F01D 5/28

(54) **HAFNON CONTAINING ENVIRONMENTAL BARRIER COATING**

(30) Priority: 16.10.2024 US 202418917961
(71) Applicant: RTX Corporation, Farmington, CT 06032 (US)
(72) Inventor: ROHBECK, Nadia, Milford 06460 (US); LITTON, David A., West Hartford 06107 (US)
(74) Representative: Dehns

(57) **Abstract**

A gas turbine engine component (200), comprising a substrate (210) containing a ceramic matrix composite material, the ceramic matrix composite material includes at least one environmental barrier coating (230) comprising at least hafnon and hafnium titanate.

## Description

### FIELD OF THE INVENTION

The subject matter disclosed herein relates to environmental barrier coatings and, in particular, to hafnon containing environmental barrier coatings.

### BACKGROUND OF THE INVENTION

Si-based ceramic matrix composites ("SiC CMC") include protective coatings such as environmental barrier coatings ("EBCs"). EBCs protect the underlying SiC CMC from water steam erosion and calcium-magnesium-alumino-silicate ("CMAS") attack, that is, CMAS deposits. During gas turbine engine operation, CMAS deposits can form and accumulate on the EBCs. If the operating temperature of the gas turbine engine is greater than approximately 2,200°F (1204 °C) , i.e., the CMAS melting point, the CMAS can transform into a glass phase. The resultant glass phase can readily infiltrate and react with the EBC. The ongoing glass phase reaction with the EBC can cause the EBC to dissolve. Dissolving can impact the mechanical integrity of the EBC and lead to EBC coating loss. Eventually, the SiC CMC substrate can be attacked by water steam and CMAS.

There exists a need to improve the ability of the EBCs to withstand CMAS attack during gas turbine engine operation.

### SUMMARY OF THE INVENTION

The present disclosure is directed, in a first aspect, to a gas turbine engine component comprising a substrate containing a ceramic matrix composite material, the ceramic matrix composite material includes at least one environmental barrier coating comprising at least hafnon and hafnium titanate.

In further embodiments of the present disclosure, including further embodiments of the above exemplary embodiments, the at least one environmental barrier coating comprises at least one of hafnon, hafnium titanate, hafnium oxide and crystalline silicon oxide.

In further examples of the present disclosure, including further examples of the above, the ceramic matrix composite material comprises a first coefficient of thermal expansion value; the environmental barrier coating comprises a second coefficient of thermal expansion value; and the first coefficient of thermal expansion value is proximate to the second coefficient of thermal expansion value.

In further examples of the present disclosure, including further examples of the above, the environmental barrier coating comprises at least one layer of a multilayer coating disposed on the ceramic matrix composite material.

In further examples of the present disclosure, including further examples of the above, the gas turbine engine component further comprises a bond coat layer disposed between the ceramic matrix composite material and the at least one environmental barrier coating.

In further examples of the present disclosure, including further examples of the above, the bond coat layer comprises at least one silicon containing material.

In further examples of the present disclosure, including further examples of the above, the at least one environmental barrier coating includes a dual phase comprising at least hafnon and hafnium titanate.

In yet another aspect, the present disclosure is directed to a method of fabricating a coating on a substrate comprising providing at least one ceramic matrix composite substrate; depositing at least one environmental barrier coating raw material composition on the ceramic matrix composite substrate, the environmental barrier coating raw material composition comprising at least hafnon and approximately 1 weight percent to approximately 20 weight percent of titanium dioxide; forming at least one coating on the ceramic matrix composite substrate, the coating comprising an amorphous phase; and thermally treating the coating to crystallize the coating and form at least one environmental barrier coating.

In further examples of the present disclosure, including further examples of the above, depositing comprises one or more of the following: slurry deposition and air plasma spraying.

In further examples of the present disclosure, including further examples of the above, the crystalline phase comprises at least one of hafnium titanate, hafnium silicate, hafnium oxide and crystalline silicon oxide.

In further examples of the present disclosure, including further examples of the above, the coating composition is a powder.

In further examples of the present disclosure, including further examples of the above, the crystalline phase is an environmental barrier coating.

In further examples of the present disclosure, including further examples of the above, the ceramic matrix composite substrate comprises a gas turbine engine component.

In further examples of the present disclosure, including further examples of the above, the raw material coating composition further comprises hafnium titanate.

In further examples of the present disclosure, including further examples of the above, the ceramic matrix composite substrate comprises a multilayer coating and the environmental barrier coating raw material composition is deposited on the multilayer coating.

In further examples of the present disclosure, including further examples of the above, thermally treating comprises treating the coating at or exceeding a temperature of approximately 1,300°C.

In further examples of the present disclosure, including further examples of the above, thermally treating further comprises densifying the coating.

In further examples of the present disclosure, including further examples of the above, ceramic matrix composite material comprises a first coefficient of thermal expansion value; the at least one environmental barrier coating comprises a second coefficient of thermal expansion value; and, the first coefficient of thermal expansion value is proximate to the second coefficient of thermal expansion value.

In further examples of the present disclosure, including further examples of the above, depositing comprises one or more of the following: slurry deposition and air plasma spraying.

In further examples of the present disclosure, including further examples of the above, the crystalline phase comprises at least one of hafnium titanate, hafnium silicate, hafnium oxide and crystalline silicon oxide.

In further examples of the present disclosure, including further examples of the above, the coating composition is a powder.

In further examples of the present disclosure, including further examples of the above, the crystalline phase is an environmental barrier coating.

In further examples of the present disclosure, including further examples of the above, the ceramic matrix composite substrate comprises a gas turbine engine component.

In further examples of the present disclosure, including further examples of the above, the raw material coating composition further comprises hafnium titanate.

In further examples of the present disclosure, including further examples of the above, the ceramic matrix composite substrate comprises a multilayer coating and the raw material coating composition is deposited on the multilayer coating.

In further examples of the present disclosure, including further examples of the above, thermally treating comprises treating the coating at or exceeding a temperature of approximately 1,300°C.

In further examples of the present disclosure, including further examples of the above, thermally treating further comprises densifying the coating.

In further examples of the present disclosure, including further examples of the above, the ceramic matrix composite material comprises a first coefficient of thermal expansion value; the at least one environmental barrier coating comprises a second coefficient of thermal expansion value; and, the first coefficient of thermal expansion value is proximate to the second coefficient of thermal expansion value.

In further examples of the present disclosure, including further examples of the above, further comprising depositing at least one bond coat layer material on the at least one ceramic matrix composite substrate prior to depositing the at least one environmental barrier coating raw material composition.

In further examples of the present disclosure, including further examples of the above, the bond coat layer comprises at least one silicon containing material.

In further examples of the present disclosure, including further examples of the above, the at least one environmental barrier coating includes a dual phase comprising at least hafnon and hafnium titanate.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a flowchart illustrating an exemplary method of fabricating an exemplary hafnon containing environmental barrier coating.
FIG. 2 illustrates an exemplary hafnon containing EBC fabricated in accordance with the exemplary method of FIG. 1.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

At gas turbine engine operating temperatures above the CMAS melting point, i.e., approximately 2,200°F (1204 °C), hafnon containing EBC may be readily infiltrated by the CMAS glass phase. The CMAS glass may migrate through the pore structure and along the grain boundaries of the hafnon containing EBC. When deposited from a melt, EBC containing hafnon may also contain free hafnia. The free hafnia present may react with the silica components of the CMAS glass phase and create a hafnon reaction product. With a sufficient amount of glass formed within the CMAS infiltrated hafnon containing EBC coating, the hafnon also will dissolve into the glass phase. This overall observed effect may be sensitive to temperature and may be significantly increased at higher temperatures during gas turbine engine operation.

The present disclosure is directed to hafnon containing environmental barrier coatings for use with gas turbine engine components. The hafnon containing environmental barrier coatings contains a dual phase of hafnon and hafnium titanate. More particularly, the dual phase contains at least one of hafnon, hafnium titanate, hafnium oxide and crystalline silicon oxide. When the coating becomes exposed to molten calcium-magnesium-alumino-silicate, and the molten calcium-magnesium-alumino-silicate infiltrates the coating, the hafnium titanate may dissolve at a rate greater than the hafnium silicate and a glass phase enriched with titanium forms. The resultant calcium-magnesium-alumino-silicate infiltrated environmental barrier coating may contain hafnium silicate and a glass phase comprising at least titanium, dissolved hafnium titanate, and a crystalline reaction product(s) containing a species of calcium-magnesium-alumino-silicate. The titanium present may slow down the reaction taking place between the molten calcium-magnesium-alumino-silicate and hafnium titanate. As a result, the molten calcium-magnesium-alumino-silicate may enhance the formation of the crystalline reaction product(s) that contain chemical species from the calcium-magnesium-alumino-silicate.

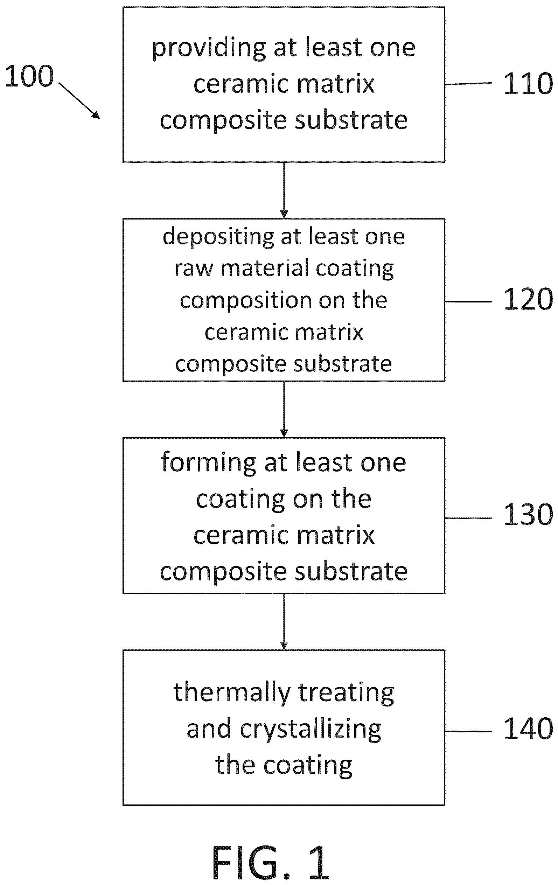

Referring now to FIG. 1, a flowchart 100 illustrating an exemplary method for fabricating a coating on a substrate is shown. At an exemplary step 110 of the flowchart 100, a ceramic composite matrix composite substrate may be provided. The ceramic matrix composite substrate may be a gas turbine engine component such as blades, vanes, blade outer air seals, combustor panels, related and adjacent parts, and the like.

At an exemplary step 120 of flowchart 100, an EBC raw material coating composition may be deposited on the ceramic matrix composite substrate. The EBC raw material coating composition may be a powder and include, but is not limited to, at least hafnon and approximately 1 weight percent to approximately 20 weight percent of titanium dioxide by weight of the raw material powder and the remainder being hafnon. Without the addition of titanium dioxide, depositing hafnon, also known as hafnium silicate, alone by, e.g., air plasma spraying, results in a coating containing a mixture of hafnium silicate and hafnium oxide. The coefficient of thermal expansion (CTE) of such a coating may or may not be proximate to a CTE of the underlying ceramic matrix composite substrate based on the amount of hafnia present in the coating. A coating containing hafnium silicate and hafnium oxide may spall and delaminate more easily due to the coefficient of thermal expansion mismatch. In contrast, hafnium titanate and hafnium oxide each are anisotropic and have CTE values that are higher than the CTE of the ceramic matrix composite. As long as the hafnium oxide is present as nano-sized grains within the hafnium silicate matrix, the resultant CTE is related to the weight percent of hafnium oxide dispersed within the hafnium silicate matrix.

When depositing the exemplary raw material coating composition disclosed herein, any hafnium oxide forming during deposition will react with the titanium dioxide present and form hafnium titanate. In addition, when post-thermally treated as discussed below, post-thermal treatment may also assist inducing full crystallization of the resultant coating. That is, during post-thermal treatment, the crystalline and crystallizing hafnia will react with titania to form hafnium titanate in the resultant coating. The resultant coating composition being deposited on the ceramic matrix composite substrate may be a mixture of hafnium titanate, hafnium silicate and any remaining hafnia present. The hafnium titanate and hafnium silicate coating composition may comprise less than approximately 20 weight percent of hafnium titanate by weight of the coating, to approximately 1 weight percent of hafnium titanate by weight of the coating. The remainder may be hafnium silicate, and additional impurities, such as hafnium oxide and crystalline silicon oxide.

Hafnium titanate possesses a lower coefficient of thermal expansion than hafnium oxide. As a result, a coating containing hafnium titanate and hafnium silicate exhibits and possesses a coefficient of thermal expansion more proximate to the coefficient of thermal expansion of the underlying ceramic matrix composite substrate. In addition, the hafnium titanate also densifies the resultant coating more than hafnium oxide. Hence, the coating containing hafnium titanate and hafnium silicate may be more likely to protect the underlying ceramic matrix composite substrate and less likely to spall and delaminate.

At an exemplary step 130 of flowchart 100, a coating containing a predominantly amorphous phase may be formed on the ceramic matrix composite substrate. Any suitable coating technique for forming the coating may be utilized. For example, suitable coating techniques may include, but are not limited to, air plasma spraying, slurry deposition, combinations thereof, and the like.

At an exemplary step 140 of flowchart 100, the coating may be thermally treated. Such post-thermal treatment leads to full crystallization of the coating, and may also densify the coating. The resultant crystalline phase may include at least one of hafnium titanate, hafnium silicate, hafnium oxide and crystalline silicon oxide. Any suitable post-thermal treatment techniques for inducing crystallization may be utilized. For example, suitable post-thermal treatment techniques may expose the coating to a temperature at or exceeding approximately 1,300°C. The resultant crystalline phase containing coating may serve as an environmental barrier coating for use in protecting a gas turbine engine component comprising a ceramic matrix composite.

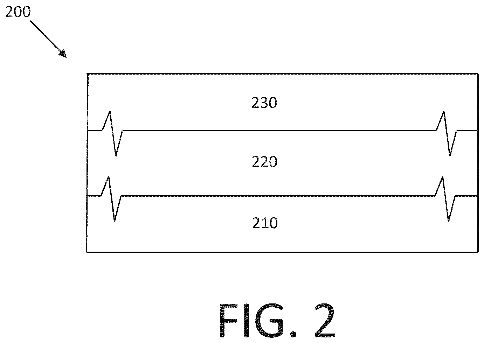

Referring now to FIG. 2, an exemplary CMC article 200 having a hafnon containing EBC is illustrated. The CMC article 200 may include a substrate 210 having disposed thereupon a bond coat 220. Suitable bond coat materials may include, but are not limited to, silicon and silicon containing materials such as, hafnium silicate, silicon oxide, silicon carbide, combinations comprising the foregoing, and the like. In at least one embodiment, the bond coat layer 220 may exhibit and possess a thickness of approximately 50 µm to approximately 500 µm. Next, the exemplary hafnon containing EBC 230 discussed herein may be disposed on the bond coat 220. In at least one embodiment, the exemplary hafnon containing EBC 230 may exhibit and possess a thickness of approximately 10 µm to approximately 1000 µm, preferably 50 µm to 500 µm, and more preferably 100 µm.

The exemplary hafnon containing EBC disclosed herein counteracts both failure modes discussed earlier. That is, the exemplary hafnon containing EBC counters both water steam erosion and CMAS deposits. As a result, gas turbine engines in general, and gas turbine engine components in particular, may experience extended lifespans due to their enhanced resilience.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A gas turbine engine component (200), comprising:
a substrate (210) containing a ceramic matrix composite material, the ceramic matrix composite material includes at least one environmental barrier coating (230) comprising at least hafnon and hafnium titanate.

2. The gas turbine engine component of claim 1, wherein the at least one environmental barrier coating (230) comprises at least one of hafnon, hafnium titanate, hafnium oxide and crystalline silicon oxide; and/or wherein the at least one environmental barrier coating (230) includes a dual phase comprising at least hafnon and hafnium titanate.

3. The gas turbine engine component of claim 1 or 2, wherein:
the ceramic matrix composite material comprises a first coefficient of thermal expansion value;
the environmental barrier coating (230) comprises a second coefficient of thermal expansion value; and
the first coefficient of thermal expansion value is proximate to the second coefficient of thermal expansion value.

4. The gas turbine engine component of any preceding claim, wherein the environmental barrier coating (230) comprises at least one layer of a multilayer coating (220, 230) disposed on the ceramic matrix composite material.

5. The gas turbine engine component of any preceding claim, further comprising a bond coat layer (220) disposed between the ceramic matrix composite material and the at least one environmental barrier coating (230), optionally wherein the bond coat layer (220) comprises at least one silicon containing material.

6. A method of fabricating a coating (220, 230) on a substrate (210), comprising:
providing at least one ceramic matrix composite substrate (210);
depositing at least one environmental barrier coating raw material composition on the ceramic matrix composite substrate (210), the environmental barrier coating raw material composition comprising at least hafnon and approximately 1 weight percent to approximately 20 weight percent of titanium dioxide;
forming at least one coating on the ceramic matrix composite substrate (210), the coating comprising an amorphous phase; and
thermally treating the coating to crystallize the coating and form at least one environmental barrier coating (230).

7. The method of claim 6, wherein depositing comprises one or more of the following: slurry deposition and air plasma spraying.

8. The method of claim 6 or 7, wherein the crystalline phase comprises at least one of hafnium titanate, hafnium silicate, hafnium oxide and crystalline silicon oxide.

9. The method of any of claims 6 to 8, wherein the coating composition is a powder.

10. The method of any of claims 6 to 9, wherein the ceramic matrix composite substrate (210) comprises a gas turbine engine component (200).

11. The method of any of claims 6 to 10, wherein the ceramic matrix composite substrate (210) comprises a multilayer coating (210, 220) and the environmental barrier coating raw material composition is deposited on the multilayer coating (210, 220).

12. The method of any of claims 6 to 11, wherein thermally treating comprises treating the coating at or exceeding a temperature of approximately 1,300°C; and/or wherein thermally treating further comprises densifying the coating (220, 230).

13. The method of any of claims 6 to 12, wherein the ceramic matrix composite material comprises a first coefficient of thermal expansion value; the at least one environmental barrier coating (230) comprises a second coefficient of thermal expansion value; and, the first coefficient of thermal expansion value is proximate to the second coefficient of thermal expansion value.

14. The method of any of claims 6 to 13, further comprising depositing at least one bond coat layer material on the at least one ceramic matrix composite substrate (210) prior to depositing the at least one environmental barrier coating raw material composition, optionally wherein the bond coat layer (220) comprises at least one silicon containing material.

15. The method of any of claims 6 to 14, wherein the environmental barrier coating raw material composition further comprises hafnium titanate; and/or wherein the at least one environmental barrier coating (230) includes a dual phase comprising at least hafnon and hafnium titanate.
